Europäisches Patentamt

European Patent Office

Office européen des brevets

(19)

(11) Numéro de publication: **0 064 110**
**B1**

(12) **FASCICULE DE BREVET EUROPEEN**

(45) Date de publication du fascicule du brevet: 28.01.87

(51) Int. Cl.⁴: **G 01 N 21/51**

(21) Numéro de dépôt: 81400682.1

(22) Date de dépôt: 30.04.81

(54) Appareil de photométrie par diffusion.

(43) Date de publication de la demande:
10.11.82 Bulletin 82/45

(45) Mention de la délivrance du brevet:
28.01.87 Bulletin 87/05

(84) Etats contractants désignés:
DE FR GB

(56) Documents cités:
FR-A-2 415 801
US-A-3 795 450
US-A-3 886 364
US-A-4 140 902

APPLIED OPTICS, vol. 17, no. 7, 1er avril 1978, NEW YORK (US) R. SPINRAD et al.: "Volume scattering function of suspended particulate matter at near forward angles: a comparison of experimental and theoretical values" pages 1125-1130

APPLIED OPTICS, vol. 16, no. 9, septembre 1977 P. ELTERMAN: "Brewster angle light trap" page 2352

(73) Titulaire: **A.M.T.E.C. Société dite**
**31, rue de Paris**
**F-06000 Nice (FR)**

(72) Inventeur: **Woodley, William Alfred**
**Les Sylphides "C" Place Fontaine du Temple**
**06100 Nice (FR)**

(74) Mandataire: **Hautier, Jean-Louis**
**Cabinet Hautier 24 rue Masséna**
**F-06000 Nice (FR)**

(56) References cited:
**ADVANCES IN INSTRUMENTATION, vol. 35, part 1, 1980 Research triangle park, NC (US) H. FROCK et al.: "Scattered light measurements using a photodiode array" pages 549-555**

**APPLIED OPTICS, vol. 19, no. 8, 15 avril 1980 NEW YORK (US) B. EWAN: "Fraunhofer plane analysis of particle field holograms" pages 1368-1372**

EP 0 064 110 B1

## Description

L'invention concerne un appareil de photométrie par diffusion dans un milieu d'analyse de la lumière émise à partir d'un laser. L'invention s'applique particulièrement pour la détermination des principales caractéristiques (taille, masse moléculaire . . .) de certaines particules telles que des macromolécules ou des virus ou des bactéries en suspension dans un solvant approprié du milieu d'analyse.

On sait qu'un faisceau lumineux traversant un milieu hétérogène est diffusé par celui-ci, dans toutes les directions de l'espace. Le spectre de diffusion, s'il peut être relevé avec précision, est susceptible de donner des informations sur la taille des particules constituant l'hétérogénéïté, leur masse moléculaire ou encore leur mouvement. Les mesures effectuées sur les rayons diffusés vers l'avant et avec des angles de déviation faibles par rapport au faisceau incident, sont les plus riches en informations représentatives des paramètres recherchés. Malheureusement, il est très difficile de les mesurer, en raison notamment des perturbations introduites par la proximité du faisceau incident direct, lequel a une intensité très supérieure à celle des rayons diffusés au voisinage.

Dans le passé, on a donc dû se contenter d'effectuer les mesures pour des angles de diffusion relativement grands (supérieurs à 10°) au moyen d'un photomultiplicateur que l'on déplaçait circulairement tout autour d'une éprouvette dans laquelle la diffusion d'un faisceau lumineux était provoquée. Ceci nécessitait ensuite une extrapolation graphique appelée "construction de Zimm", faite à partir des résultats de mesures aux angles élévés, pour en déduire les valeurs aux faibles angles et aux faibles concentrations, lesquelles permettent en particulier la détermination de la masse moléculaire de la substance analysée. Malheureusement, cette extrapolation dans la construction de Zimm peut être assez largement entachée d'erreur, si les centres de diffusion constituant l'hétérogénéïte ont des tailles très différentes, ou si des impuretés (poussières) sont présentes dans le milieu à analyser.

En revanche, si les caractéristiques de diffusion dépendent normalement de la taille et de la forme des centres de diffusion, ce qui introduit un facteur de forme dans les équations (lequel est difficile à apprécier et constitue l'une des sources d'erreur de l'extrapolation de Zimm), il est à est à noter que ce facteur tend vers l'unité pour les petits angles de diffusion, ce qui montre l'intérêt de pouvoir effectuer des mesures directes dans ce domaine.

En particulier, si des mesures peuvent être effectivement effectuées dans le domaine des petits angles, l'extrapolation de Zimm n'est plus nécessaire. On a alors recours à une autre méthode consistant à déterminer, pour une pluralité d'angles de diffusion faibles, un paramètre appelé "rapport de Rayleigh". Le rapport de Rayleigh se définit comme étant le quotient entre l'intensité lumineuse diffusée pour un angle faible donné et l'intensité du faisceau lumineux non dévié. Si ces mesures sont faites pour un nombre suffisant d'angles de diffusion faibles et à différentes concentrations de la substance à analyser, on peut en déduire la masse moléculaire et la taille des centres de diffusion avec une précision bien meilleure que par la construction de Zimm. Un progrès notable a été obtenu par, d'autre part, l'utilisation du laser en tant que source lumineuse et, d'autre part, la mise au point d'un appareil permettant de déterminer le rapport de Raleygh aux petits angles. Un tel appareil, qui est décrit en particulier dans le brevet américain no 3.843.268, comporte une éprouvette renfermant la substance à analyser en présence d'un solvant et des moyens de focalisation d'un faisceau laser à l'intérieur de cette éprouvette. Un écran comportant une ouverture annulaire est placé à la sortie de l'éprouvette de façon que ladite ouverture soit centrée sur l'axe du faisceau incident. Un faisceau diffusé selon un angle donné est donc sélectionné par cette ouverture. Le diamètre de celle-ci est, bien entendu, fonction de l'angle de diffusion pour lequel on désire déterminer le rapport de Rayleigh. Cependant, le faisceau incident non dévié et de forte intensité, qui sort de l'éprouvette, est divergent puisque la focalisation a lieu dans ladite éprouvette. Ceci empêche d'effectuer des mesures dans le domaine de très petits angles de diffusion, car le diamètre de l'ouverture annulaire correspondante devrait alors être si faible qu'il rencontrerait une partie au moins du faiscent incident non diffusé, ôtant toute signification à la mesure. En pratique, avec un tel type d'appareil, le rapport de Rayleigh ne peut plus être déterminé pour des angles de diffusion inférieurs à 2°. En outre, l'écran portant l'ouverture annulaire de sélection doit être changé pour toute mouvelle mesure portant sur un angle de diffusion différent, puisque le diamètre de l'ouverture conditione le choix de l'angle de diffusion analysé. Autrement dit, cet appareil ne permet pas de relever simultanément toutes les données permettant le calcul du rapport de Rayleigh pour une pluralité d'angles de diffusion. Les mesures demandent, au contraire, un certain temps pendant lequel l'état du milieu d'analyse peut varier, ou encore des perturbations extérieures aléatoires peuvent survenir. Ceci constitue une source supplémentaire d'erreur.

L'état de la technique peut être défini par les documents suivants:
— APPLIED OPTICS, volume 17, n° 7, 1° Avril 1978, New York (US) — R. SPINRAD et Al, pages 1125—1130.
— US — A — 3.795.450
— US — A — 3.886.364

Le document APPLIED OPTICS décrit un appareil de photométrie par diffusion pour l'analyse de particules en suspension dans une cellule cylindrique. Il est du type comportant un générateur de faisceau laser agencé pour illuminer la cellule; ladite cellule comporte une paroi d'entrée formée par une première lentille plan convexe et une paroi de sortie formée par une seconde lentille plan convexe; un moyen de mesure optique est placé sensiblement dans le plan focal de la seconde lentille. Ce photomètre est basé sur la théorie de la diffusion de MIE, il est adapté à la mesure de particules bien au-dessus du micron.

Le brevet US—A—3.795.450 décrit notamment un boîtier métallique pouvant recevoir un milieu d'analyse dans un alésage conçu à cet effet. Les parois d'entrée et de sortie sont formées par une première lentille et une seconde lentille qui viennent se visser, au boîtier, avec des bagues de manière étanche.

Le brevet US—A—3.886.364 décrit également une cellule d'analyse permettant une analyse par un photomètre. La cellule est analogue à celle décrite dans le brevet US—A—3.795.450, mais il y est décrit en plus des moyens de chauffage qui permettent de mettre le milieu d'analyse aux conditions de température nécessaire à ladite analyse. Ladite cellule est spécialement adaptée pour résister aux très hautes températures et aux très hautes pressions.

L'invention concerne un appareil de photomètrie par diffusion, notamment pour l'analyse de particules en suspension dans un milieu neutre contenu dans une éprouvette d'analyse, du type comportant un générateur de faisceau laser agencé pour illuminer ladite éprouvette et des moyens de détection de la lumière diffusée suivant au moins un angle prédéterminé, le faisceau laser étant sensiblement cylindrique au moins à l'intérieur de ladite éprouvette, celle-ci comporte une paroi d'entrée pour le faisceau laser, cette paroi étant conformée en une seconde lentille coaxiale à une première lentille constituant la paroi de sortie, de préférence du type plan-convexe caractérisé par le fait que l'éprouvette d'analyse présente la forme d'un élément de boîtier comport des conduits de circulation d'un fluide caloporteur, qui sont ménagés dans la masse de l'élément de boîtier pour la régulation de température du milieu.

Ladite première lentille permet donc de focaliser tous les rayons résultant d'une diffusion sous un angle donné en une zone annulaire correspondante de son plan focal. Il suffit donc de placer des cellules optoélectriques, par exemple des photodiodes, en des emplacements choisis de ce plan focal, pour pouvoir effectuer simultanément des mesures d'intensité lumineuse correspondant respectivement à un certain nombre d'angles de diffusion sélectionnés. Il est à noter qu'avec la structure définie ci-dessus le faisceau laser incident, ainsi que tous les rayons diffusés, ne sont focalisés qu'au-delà de l'éprouvette d'analyse et plus particulièrement sur le plan focal de ladite première lentille où se trouve précisément placé le moyen de mesure optoélectrique précité. Ce dernier peut être constitué soit par une rangée de photodiodes espacées les unes des autres pour correspondre chacune avec un certain angle de diffusion sélectionné, soit par une seule photodiode assujettie à se déplacer le long d'un axe dudit plan focal pour remplir la même fonction. Par ailleurs, le générateur de faisceau laser précité est choisi pour émettre une lumière polarisée, tandis qu'un polariseur-analyseur est susceptible d'être placé sur le trajet optique des faisceaux diffusés, à la sortie de ladite eprouvette, en considérant le sens de propagation du faisceau laser, pour permettre d'étudier la dépolarisation partielle de la lumière provoquée à son passage dans le milieu d'analyse. La distribution de la dépolarisation suivant les angles de diffusion donne encore accès à d'autres informations sur la structure et la masse moléculaire des centres de diffusion qui sont les particules objets de l'analyse.

L'invention sera mieux comprise et d'autres avantages de celle-ci apparaîtront mieux à la lumière de la description qui va suivre, donnée uniquement à titre d'exemple et faite en référence aux dessins non limitatifs annexés, dans lesquels:

— la figure 1 est une vue schématique en élévation de l'appareil devant être équipé de l'eprouvette conforme à l'invention;

— la figure 2 est une vue schématique partielle, à plus grande échelle, de ce même appareil, illustrant ses propriétés de focalisation;

— la figure 3 est une vue extérieure d'un mode de réalisation préféré de l'eprouvette équipant l'appareil des figures 1 et 2, et

— la figure 4 est une coupe éclatée IV—IV de la figure 3.

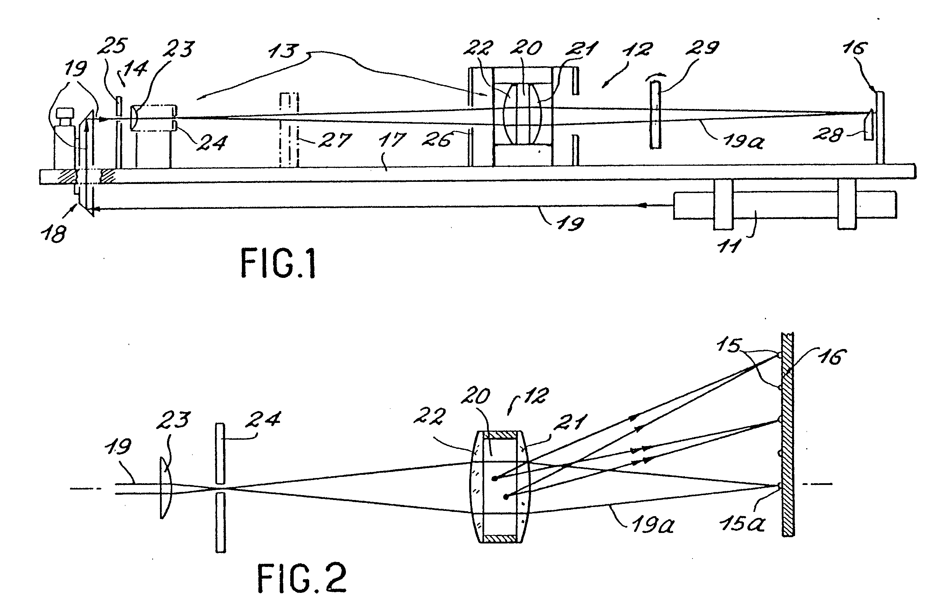

En se référant plus particulièrement aux figures 1 et 2, l'appareil de photométrie comporte un générateur de faisceau laser 11, une eprouvette d'analyse 12, des moyens 13 pour rendre le faisceau laser parallèle et comportant notamment un expanseur 14 destiné à élargir le faisceau laser pénétrant dans l'éprouvette 12, et des moyens de mesure optoélectrique 15 agencés dans un plan de réception 16. Le générateur 11 est monté sous une table de travail 17 traversée par un double prisme de déviation 18 ou périscope, à positionnement réglable, pour le redressement du faisceau laser 19. Cet agencement classique permet de disposer d'un ensemble plus compact, mais il est bien évident que le générateur 11 pourrait tout aussi bien être disposé à gauche de l'expanseur 14 en considérant la figure 1, en supprimant le prisme 18. Le générateur de faisceau laser 11 comporte sa propre optique interne, non représentée, permettant d'obtenir un mince faisceau 19, quasi cylindrique. L'éprouvette d'analyse 12 constituant le coeur de l'invention est remarquable en ce qu'elle se compose essentiellement d'une cavité 20 munie d'une paroi d'entrée pour le faisceau laser, cette paroi étant conformée en une seconde lentille 22 coaxiale à la première lentille 21 constituant la paroi de sortie, de préférence du type plan convexe. Ladite éprouvette 12 comporte des conduits 36 de circulation d'un fluide caloporteur, qui sont ménagés dans la masse de l'élément de boîtier 30 pour la régulation de température du milieu. Par ailleurs, le plan de réception 16 est confondu avec le plan focal de ladite première lentille 21. La cavité 20 est destinée à contenir les substances à analyser, en suspension dans un solvant adéquat. Etant donné que, pour obtenir une bonne précision de la mesure, le faisceau laser 19 doit être le plus cylindrique possible à l'intérieur de l'éprouvette et qu'il est préférable que son diamètre au niveau de ladite éprouvette soit très supérieur à ce qu'il est à sa sortie du générateur 11, les moyens 13, pour rendre le faisceau parallèle, sont avantageusement combinés, comme mentionné précédemment, à un expanseur 14, l'agencement étant le suivant. L'éprouvette 12 comporte une paroi d'entrée pour le faisceau laser, parallèle et coaxial à la paroi de sortie, et conformée en une seconde lentille 22. Autrement dit, lesdites première et seconde lentilles sont coaxiales et l'expenseur 14 est placé sur le trajet optique dudit faisceau laser, en avant de ladite seconde lentille, en considérant le sens de propagation du faisceau. L'expanseur comporte, quant à lui, une troisième lentille 23, du type plan-convexe, espacée de ladite seconde lentille de façon que leurs plans focaux soient confondus. La seconde lentille 22 est aussi avantageusement du type plan-convexe et analogue à la première, les deux faces planes desdites première et seconde lentilles étant en vis-à-vis, de façon à délimiter l'espace interne de la cavité 20. Dans l'exemple illustré, toutes les lentilles sont du type plan-sphérique. L'agencement optique en amont de l'éprouvette 12 est comnplété par un système de filtrage comportant notamment un premier diaphragme 24, placé dans le plan focal commun desdites seconde et troisième lentilles, un second diaphragme 25, placé en avant de la troisième lentille 23, en considérant le sens de propagation du faisceau laser, et un troisième diaphragme 26, placé entre le diaphragme 24 et l'éprouvette 12, à proximité de cette dernière. Ce système de filtrage élimine les perturbations dues aux décharges du laser. Un atténuateur 27 est placé, de façon amovible, sur le trajet optique du faisceau laser 19, en avant de l'éprouvette 12. Un prisme de Brewster 28 est monté, de façon amovible, pour que son arête puisse être positionnée au voisinage du trajet optique du faisceau laser non dévié, entre l'éprouvette 12 et le plan focal de la lentille 21, de préférence à promimité immédiate de ce dernier. Les photodiodes 15 sont disposées sensiblement suivant un axe du plan 16, cet axe passant par le point de rencontre entre le trajet optique du faisceau laser non dévié 19a (fig. 2) à la sortie de l'éprouvette 12 et le plan focal 16. Une photodiode 15a particulière est placée à ce point de rencontre. Comme mentionné précédemment, cet alignement de photodiodes pourrait être remplacé par un seul transducteur assujetti à se déplacer sensiblement suivant un axe analogue à celui qui est défini ci-dessus. Enfin, on notera qu'un polariseur-analyseur 29 peut être placé entre l'éprouvette 12 et le plan focal 16, pour l'étude de la dépolarisation partielle des rayons diffusés.

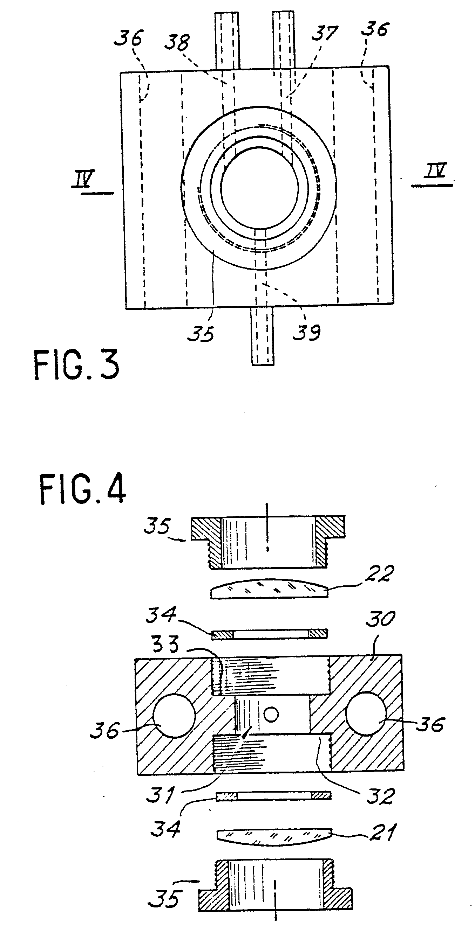

En se reportant maintenant plus particulièrement aux figures 3 et 4, on voit que l'éprouvette 12 comporte un élément de boîtier 30, dans lequel est pratiqué un alésage traversant 31, destiné à contenir le milieu d'analyse. Les deux portions extrêmes opposées de l'alésage 31 sont élargies pour définir deux épaulements parallèles 32 et 33 sur lesquels prennent respectivement appui les lentilles 21 et 22, par l'intermédiaire de joints annulaires d'étanchéité 34, en polytétrafluoro-éthylène. Les deux portions élargies définissant les épaulements 32 et 33 sont taraudées pour recevoir des manchons filetés 35 assurant le maintien des lentilles. Des conduits de circulation 36, pour un fluide caloporteur, sont ménagés dans la masse de l'élément de boîtier 30, pour la régulation de la température du milieu d'analyse. La circulation du fluide caloporteur peut être réglée à partir d'une sonde de température plongeant dans l'alésage 31 au moyen d'un perçage 37. Deux autres perçages 38 et 39 permettent de remplir ou de vider l'éprouvette.

L'utilisation de l'appareil qui vient d'être décrit est des plus simples et découle avec évidence de la description qui précède. On peut procéder d'abord à une série complète de mesures et d'expérimentations en n'introduisant, dans l'éprouvette 12, que le solvant de la substance à analyser, ceci dans le but d'établir la configuration du bruit de fond de l'installation. Ensuite, on recommence une série de mesures après avoir introduit la substance à analyser. Comme mentionné précédemment, la détermination des rapports de Rayleigh implique une mesure de l'intensité du faisceau incident non dévié. Cette mesure s'effectue sur la photodiode 15a en interposant l'atténuateur 27, le prisme de Brewster 28 étant enlevé. Ensuite, la mesure de 'intensité lumineuse des faisceaux diffisés s'effectue en l'absence de l'atténuateur 27 et en interposant le prisme de Brewster 28 pour absorber le faisceau incident non dévié. Chaque photodiode 15 reçoit une certain intensité lumineuse qui est représentative de 'intensité lumineuse diffusée suivant un angle donné correspondant à la position de la photodiode 15 sur le plan 16.

Par ailleurs, comme on l'a indiqué précédemment, le générateur de faisceau laser 11 émet une lumière polarisée. La lumière diffusée dans la cellule 12 est partiellement dépolarisée et la répartition de dépolarisation, en fonction des angles de diffusion, peut donner certaines informations sur les caractéristiques des centres de diffusion à l'intérieur de la cavité 20. C'est pourquoi on peut effectuer les opérations indiquées ci-dessus en interposant le polariseur-analyseur 29 entre l'éprouvette 12 et le plan focal 16 et en recherchant le plan de polarisation pour chaque faisceau diffusé reçu par l'une des photodiodes 15. Autrement dit, pour chaque photodiode, on fait tourner le diffuseur-analyseur 29 jusqu'à ce que l'intensité lumineuse reçue par la photodiode considérée soit maximume, et on repère, pour cette photodiode donnée, le plan de polarisation de la lumière diffusée captée par cette photodiode.

Bien entendu, des variantes sont possibles. En particulier, on a préconisé une lentille 21 du type plan-sphérique. Cependant, pour l'étude de particules filiformes, il peut être avantageux d'utiliser une lentille du type plan-cylindrique. D'autre part, au lieu de disposer des photodiodes ponctuelles suivant un axe du plan focal de la première lentille, comme mentionné précédemment, on peut donner, à chaque photodiode, une forme d'anneau, ces anneaux étant disposés concentriquement dans ledit plan focal. De cette façon, chaque photodiode ou transducteur opto-électrique capte un rayonnement diffusé plus intense, ce qui améliore la sensibilité du système.

## Revendications

1. Appareil de photométrie par diffusion, notamment pour la détermination des principales caractéristiques (taille, masse moléculaire) de certaines particules telles que des macromolécules ou des virus ou des bactéries en suspension dans un milieu neutre contenu dans une éprouvette d'analyse (12), du type comportant un générateur de faisceau laser (11) agencé pour illuminer ladite éprouvette et des moyens de détection (15) de la lumière diffusée suivant au moins un angle prédéterminé, ledit faisceau laser étant sensiblement cylindrique au moins à l'intérieur de ladite éprouvette, celle-ci comportant une paroi d'entrée pour le faisceau laser, cette paroi étant conformée en une seconde lentille (22) coaxiale à première lentille (21) constituant la paroi de sortie, de préférence du type plan-convexe, caractérisé par le fait que l'éprouvette d'analyse (12) présente la forme d'un élément de boîtier (30) comportant des conduits (36) de circulation d'un fluide caloporteur qui sont ménagés dans la masse de l'élément de boîtier (30), pour la régulation de temperature du milieu.

2. Appareil de photométrie par diffusion selon la revendication 1 caractérisé par le fait que la circulation du fluide caloporteur peut être réglée à partir d'une sonde de température plongeant au moyens d'un perçage (37) dans un alésage (31) pratiqué dans ledit élément de boîtier (30) et destiné à contenir ledit milieu.

## Patentansprüche

1. Diffusionsphotometrische Vorrichtung, insbesondere zur Bestimmung wesentlicher Charakteristika (größe, Molekularmasse) bestimmter Teilchen, wie z.B. suspendierte Makromoleküle, Viren oder Bakterien in neutralem Milieu, das in einem Analyse-Probenbehälter (12) enthalten ist, mit einer Laserlichtquelle (11) zum Ausleuchten der Probenkammer und mit Detektoren (15) des diffundierten Lichtes mindestens in einem vorbestimmten Diffusionswinkel, wobei der Laserstrahl im wesentlichen zylindrisch ist, mindestens im Inneren der Probenkammer, die eine Eingangswand für Laserstrahl aufweist, deren Wandungen eine zweite Linse (22) bilden, die koaxial zu einer ersten Linse (21) angeordbet ist, die die Ausgangswand bildet, wobei die Linse vorzugsweise eine Plan-Konvex-Linse ist, dadurch gekennzeichnet, daß der Analysen-Probenbehälter (12) die Form eines Geuäuseelements (30) aufweist, das Leitungen (36) für die Zirkulation eines Kühlmittelfluids aufweist, die in den Körper des Gehäuses (30) eingearbeitet sind, um die Temperatur des Milieus zu regeln.

2. Vorrichtung nach Anspruch 1, dadurch gekennzeichnet, daß die Zirkulation des Kühlmittelfluids mit Hilfe eines Temperaturfühlers geregelt werden kann, der mittels einer Bohrung (37) in einer Öffnung (31) eingeführt ist, die in das Gehäuseelement (30) eingearbeitet ist und dazu bestimmt ist, das besagte Milieu aufzunehmen.

## Claims

1. Diffuse radiation photometer, specially for determining the principle characteristics (size, molecular mass) of certain particles as macromolecules or virus or bacteries suspended in a neutral medium contained in a sample container (12) for analysis, of the kind comprising a laser light source (11) to illuminate said sample container and detection means (15) detecting the light at least in a predetermined diffusion angle, said laser light beam having a sensibly cylindrical shape, at least within said sample container, which comprises an entrance sidewall for said laser beam being conform with a second lense (22) coaxial with a first lense (21) constituting the outlet side wall, said lense being preferably of the piano-convex type, characterized in that said sample container (12) for analysis has the shape of a housing element (30) with conduits (36) for circulation of a coolant fluid, which are fitted in the body of the housing element (30) for regulating the temperature of said medium.

2. Diffuse radiation photometer according to claim 1, characterized in that the coolant fluid flow can be regulated with the help of a temperature detector, being introduced in an opening (31) by a bore (37) which is fitted in said housing element (30) and destinated to contain said medium.

FIG.1

FIG.2

0 064 110

FIG. 3

FIG. 4